# EUROPÄISCHE PATENTANMELDUNG

(11) **EP 4 786 930 A1**
(43) Veröffentlichungstag der Anmeldung: **05.08.2026**
(21) Anmeldenummer: 26154259.1
(22) Anmeldetag: 27.01.2026
(51) Int. Cl.: G01F 23/263

(54) **VORRICHTUNG UND VERFAHREN ZUR WASSERSTANDÜBERWACHUNG AUF FLACHDÄCHERN**

(30) Priorität: 31.01.2025 DE 102025103634
(71) Anmelder: Sita Bauelemente GmbH, 33378 Rheda-Wiedenbrück (DE)
(72) Erfinder: Behr, Christian, 33330 Gütersloh (DE); Kasparek, Susanne, 48231 Warendorf (DE)
(74) Vertreter: DTS Patent- und Rechtsanwälte PartmbB

(57) **Zusammenfassung**

Eine Vorrichtung mit einem Gehäuse, für eine Wasserstandüberwachung auf Flachdächern, umfassend zumindest eine Energieerzeugungseinheit und zumindest eine Energiespeichereinheit, eine Sensoreinheit, die dazu eingerichtet ist, ereignisbasiert einen Wasserstand zu bestimmten; und weiter umfassend zumindest eine Kommunikationseinheit 40, die dazu eingerichtet ist, zumindest ein erstes Informationssignal, periodisch und/oder auf Grund des Ereignisses, drahtlos an ein externes System zu übertragen.

## Beschreibung

Die Erfindung betrifft eine Vorrichtung und ein Verfahren zur Überwachung des Wasserstands auf Flachdächern.

Im Stand der Technik sind Systeme zur Wasserstandüberwachung auf Flachdächern bekannt. Diese erfordern häufig einen Feststromanschluss oder aufwendige Verkabelung, was die Installation und Wartung erschwert. Drahtlose Lösungen existieren, sind jedoch oft unflexibel und weisen einen hohen Energieverbrauch auf, was ihre Verlässlichkeit bei längeren Betriebszeiten einschränkt.

Eine weitere Herausforderung liegt in der robusten Erfassung von Wasserständen unter wechselnden Umweltbedingungen, wie Regen, Laub oder Temperaturschwankungen. Fehlalarme oder Messungenauigkeiten durch geringe Schwellenabweichungen sind bei bestehenden Systemen häufig eine große Herausforderung. Zudem fehlt oft eine einfache Möglichkeit, Betriebsparameter, beispielsweise Grenzwerte für Wasserstände, flexibel anzupassen.

Die Aufgabe der vorliegenden Offenbarung ist es, eine Vorrichtung und ein Verfahren bereitzustellen, die eine zuverlässige, energieeffiziente und autarke Überwachung des Wasserstands auf Flachdächern ermöglichen. Dabei soll das System unabhängig von lokalen Netzwerkstrukturen arbeiten und eine hohe Anpassungsfähigkeit an unterschiedliche Einsatzbedingungen gewährleisten. Eine einfache Installation, minimaler Wartungsaufwand, autarke Energieversorgung und die autarke drahtlose Datenübermittlung sind weitere Anforderungen. Gleichzeitig soll die Lösung robust gegenüber Umwelteinflüssen wie Regen, Schmutz und Temperaturschwankungen sein.

Diese Aufgabe wird erfindungsgemäß gelöst durch eine Vorrichtung gemäß dem unabhängigen Anspruch 1 und ein Verfahren gemäß Anspruch 12. Bevorzugte

Ausführungsformen der Vorrichtung und des Verfahrens sind in den abhängigen Ansprüchen 2 bis 11 angegeben.

Es ist vorgesehen, dass eine Vorrichtung mit einem Gehäuse für eine Wasserstandüberwachung auf Flachdächern zumindest eine Energieerzeugungseinheit, eine Energiespeichereinheit und eine Sensoreinheit umfasst. Die Sensoreinheit ist dazu eingerichtet ereignisbasiert einen Wasserstand zu bestimmen. Ferner ist vorgesehen, dass die Vorrichtung eine Kommunikationseinheit umfasst, die dazu eingerichtet ist, ein erstes Informationssignal periodisch und/oder auf Grund des Ereignisses drahtlos an ein externes System zu übertragen.

Der Vorteil einer Vorrichtung im Sinne der vorliegenden Offenbarung ist, dass eine autarke Energieversorgung und -bereitstellung, sowie eine autarke Kommunikation gewährleistet wird. Die Energieerzeugungseinheit und die Energiespeichereinheit können als autarke Energieversorgungseinheit zusammenarbeiten, sodass die Vorrichtung unabhängig von einer externen Stromversorgung betrieben werden kann.

Unabhängig von einer externen Stromversorgung kann im Sinne der vorliegenden Offenbarung bedeuten, dass die Vorrichtung während ihres Betriebs, insbesondere bei Mess- und Kommunikationsvorgängen, nicht auf eine Anbindung an ein Stromnetz angewiesen ist. Insbesondere erfolgt die Stromversorgung während des Betriebs ohne die Verwendung eines Stromkabels, das mit einer externen Steckdose eines Stromnetzes verbunden wäre.

Dies kann den Einsatz der Vorrichtung auf Flachdächern, wo keine kabelgebundene Stromversorgung verfügbar ist ermöglichen.

Die ereignisbasierte Funktionsweise der Sensoreinheit kann den Energieverbrauch reduzieren, da die Vorrichtung nur bei relevanten und/oder bestimmten Ereignissen einen Wasserstand auf dem Flachdach bestimmt. Dies kann den Energieverbrauch minimieren und die Lebensdauer der Energiespeichereinheit verlängern und einen zuverlässigen Betrieb gewährleisten.

Zusätzlich kann die drahtlose Kommunikationseinheit eine einfache Integration der Vorrichtung in externe Systeme, beispielsweise bestehende Überwachungssysteme ermöglichen, wodurch der Wasserstand auf Gebäudedächern, insbesondere Flachdächern, aus der Ferne überwacht werden kann.

Im Sinne dieser Offenbarung der Begriff "Wasserstandüberwachung" ein Verfahren oder eine Vorrichtung beschreiben, das darauf ausgelegt ist, den Wasserstand auf einer Fläche, insbesondere auf Flachdächern, zu messen und kritische Wasserhöhen zu erkennen.

Der Begriff "Flachdächer" im Sinne der vorliegenden Offenbarung kann sich auf Dachflächen mit geringer Neigung beziehen, die üblicherweise auf eine Entwässerung angewiesen sind und als Standort für die Vorrichtung gemäß der vorliegenden Offenbarung genutzt werden können. Insbesondere kann der Neigungswinkel dieser Flachdächer weniger als 10 Grad betragen. In vielen Fällen können diese Neigungswinkel zwischen 0 Grad, beispielsweise absolut flach und etwa 5 Grad liegen.

Eine "Energieerzeugungseinheit" im Sinne der vorliegenden Offenbarung kann als eine Komponente verstanden werden, die elektrische Energie bereitstellt. Beispiele hierfür sind Solarzellen. Andere Energiequellen, wie kleinere Windkraftgeneratoren, können für den autarken Betrieb der Vorrichtung geeignet sein.

Eine "Energiespeichereinheit" im Sinne der vorliegenden Offenbarung kann sicherstellen, dass elektrische Energie für den Betrieb der Vorrichtung gespeichert wird. Dies kann durch wiederaufladbare Akkumulatoren (Akkus) erfolgen. Im Sinne der vorliegenden Offenbarung sind Akkumulatoren Batterien, die mehrfach aufladbar sind und somit eine autarke Energieversorgung der Vorrichtung gewährleisten, insbesondere für die autarke Wasserstandmessung und die autarke Kommunikation.

Geeignete chemische Zusammensetzungen für die Energiespeichereinheit können Lithium-Polymer-Zellen (LiPo) umfassen. Auch andere chemische Zusammensetzungen, die sich durch eine hohe Energiedichte, geringes Gewicht und lange Lebensdauer auszeichnen können verwendet werden.

Die Energiespeichereinheit kann beispielsweise für eine Betriebstemperaturbereich von -30°C bis +100°C, insbesondere im Bereich -20°C bis +80°C, ausgebildet sein. Insbesondere kann die Energiespeichereinheit für eine maximale Betriebstemperatur von +80°C vorgesehen sein. Die Energiespeichereinheit kann für ein Laden, beispielsweise zwischen 0°C und 45°C ausgebildet sein, um die Lebensdauer der Zellen zu maximieren.

Eine "Sensoreinheit" im Sinne der Offenbarung kann eine Komponente sein, die zur Erfassung physikalischer Parameter eingerichtet ist. Diese Erfassung kann beispielsweise kapazitiv erfolgen. Die Sensoreinheit kann beispielsweise einen kapazitiven Sensorteil umfassen, der den Wasserstand durch Änderungen der elektrischen Kapazität ermittelt, wenn Wasser in die Nähe des Sensors gelangt. Dadurch kann eine präzise und robuste Messung auf Flachdächern erfolgen.

Die Sensoreinheit kann zumindest zwei Untereinheiten ausbilden, einen kapazitiven Sensorteil und eine Auswertungseinheit. Der kapazitive Sensorteil kann beispielsweise als "Sensorstab" im Sinne eines "kapazitiven Messfühlers" ausgebildet sein. Der kapazitive Sensorteil ist der physikalische Teil der Sensoreinheit, der aus dem Gehäuse herausragen kann, um Änderungen in der elektrischen Kapazität zu erfassen.

Die **Auswertungseinheit der Sensoreinheit kann** die Elektronik umfassen, die die vom kapazitiven Sensorteil erfassten Rohdaten verarbeitet, beispielsweise eine Recheneinheit, insbesondere ein Prozessor, der die Signale interpretieren und gegebenenfalls aufbereiten kann.

Die Sensoreinheit kann beispielsweise mittels der Auswertungseinheit die erfassten Messdaten, beispielsweise Kapazitätsänderungen, in Echtzeit mit zumindest einem vorab definierten Grenzwert, wie einer Warnschwelle und/oder einer Alarmschwelle, vergleichen. Sobald zumindest einer der Grenzwerte durchquert wird, kann die Sensoreinheit, insbesondere die Auswertungseinheit, weitere Einheiten der Vorrichtung gemäß der vorliegenden Offenbarung aktivieren, beispielsweise die Kommunikationseinheit, welche zumindest einen Grenzwert, beispielsweise eine Warn- und/oder Alarmschwelle, drahtlos an das externes System übermitteln.

Die Auswertungseinheit kann softwareseitig durch eine Ereignisverarbeitungslösung, wie beispielsweise Apama EPL, ergänzt werden. Apama EPL kann die Echtzeitanalyse der Sensordaten ermöglichen, sowie die Festlegung spezifischer Ereignisregeln, beispielsweise zumindest eines Grenzwerts, und die gezielte Auslösung von Aktionen bei Eintritt eines Ereignisses, beispielsweise eines Über- oder Unterschreitens eines Grenzwerts. Dies gewährleistet, dass nur relevante Daten verarbeitet und weitergeleitet werden, wodurch der Energieverbrauch minimiert wird. Insbesondere wird der Energieverbrauch der Vorrichtung verbessert, da die Kommunikationseinheit nur bei relevanten Ereignissen aus einem Energiesparmodus aktiviert werden kann indem sie in einen Kommunikationsmodus wechselt. Dies wird durch die gezielte Analyse und Verarbeitung der Messdaten ermöglicht.

Die Auswertungseinheit kann beispielsweise im Inneren des Gehäuses angeordnet sein, während der kapazitive Sensorteil aus dem Gehäuse herausragen kann, sodass die Sensoreinheit zumindest teilweise aus dem Gehäuse heraussteht. Die Position der Auswertungseinheit und des kapazitiven Sensorteils kann flexibel gestaltet werden. Dabei kann es sein, dass keine klare Trennung zwischen den beiden Teilen der Sensoreinheit definiert ist, sodass der Übergang zwischen dem im Gehäuse untergebrachten und dem außerhalb des Gehäuses befindlichen Bereich fließend gestaltet ist. Dies ermöglicht eine flexible Anpassung der Vorrichtung an spezifische Anforderungen, ohne eine feste Grenze zwischen den inneren und äußeren Komponenten der Sensoreinheit vorzugeben.

Die Formulierungen "Ereignisbasiert" und "auf Grund eines Ereignisses" können im Sinne der vorliegenden Offenbarung bedeuten, dass eine Funktion oder Aktion der Vorrichtung durch das Eintreten eines spezifischen Ereignisses ausgelöst wird. Ein solches Ereignis kann beispielsweise das Überschreiten und/oder Unterschreiten eines Grenzwerts sein.

Die Sensoreinheit kann solange das Ereignisses nicht eingetreten ist Kapazitätsänderungen erfassen und erst mit Eintritt des Ereignisses, beispielsweise eines Überschreitens und/oder Unterschreitens eines Grenzwerts, den eigentlichen Wasserstand bestimmen und die Kommunikationseinheit aktvieren, bspw. in dem die Kommunikationseinheit aus einem Energiesparmodus in den Kommunikationsmodus wechselt.

Das "Informationssignal" im Sinne der vorliegenden Offenbarung kann einen Datensatz beschreiben, der Informationen über den berechneten Wasserstand umfasst. Das Informationssignal kann andere relevante Parameter enthalten. Das Informationssignal kann von der Vorrichtung durch eine Kommunikationseinheit für die drahtlose Übertragung bereitgestellt werden.

Im Sinne der vorliegenden Offenbarung bedeutet "periodisch", dass die Kommunikationseinheit in gleichmäßigen Zeitabständen das Informationssignal, beispielsweise ein erstes Informationssignal, das einen aktuellen Wasserstand umfasst, übertragen kann. Periodisch kann im Sinne der vorliegenden Offenbarung beispielsweise 1-mal täglich bedeuten. Die Kommunikationseinheit kann dazu automatisch aus dem Energiesparmodus in den Kommunikationsmodus wechseln und kann das erste Informationssignal an das externe System übertragen, ohne dass die Sensoreinheit das Ereignis einer Grenzwert Über -und/oder Unterschreitung, festgestellt hat. Außerdem kann die Kommunikationseinheit während dieser aktiven Phase ein zweites Informationssignal empfangen, das beispielsweise einen neuen Grenzwert enthalten kann. Die regelmäßige Wiederholung solcher Abläufe gewährleistet eine kontinuierliche Überwachung.

"Drahtlos" kann im Sinne der vorliegenden Offenbarung bedeuten, dass die Kommunikation der Vorrichtung ohne physische Kabel erfolgt. Dies geschieht üblicherweise durch den Einsatz von Funktechnologien wie WLAN, Mobilfunk oder andere kabellose Übertragungsmethoden.

Ein "externes System" im Sinne der vorliegenden Offenbarung kann ein von der Vorrichtung unabhängiges Gerät oder eine Plattform bezeichnen, die Daten empfängt oder verarbeitet. Dies könnte beispielsweise eine Cloud-Plattform oder ein dediziertes Überwachungsgerät sein.

Es kann vorgesehen sein, dass die Sensoreinheit derart angeordnet ist, dass sie zumindest teilweise aus dem Gehäuse hervorsteht. Diese Anordnung ermöglicht eine optimale Positionierung der Sensoreinheit, wodurch sie direkten Zugang zur Umgebung hat, um die Kapazitätsänderung zu erfassen und den Wasserstand zu ermitteln. Dadurch wird die Genauigkeit der Wasserstandmessung verbessert, da die Sensoreinheit näher am zu überwachenden Bereich positioniert ist. Gleichzeitig bleibt ein Großteil der Sensoreinheit, beispielsweise eine Recheneinheit, durch das Gehäuse vor äußeren Einflüssen wie Schlagregen oder mechanischen Belastungen geschützt, was die Lebensdauer der Sensoreinheit und somit der Vorrichtung gemäß der Offenbarung erhöht und Beschädigungen minimiert.

Im Sinne der vorliegenden Offenbarung kann der Ausdruck "teilweise hervorstehen" bedeuten, dass ein Abschnitt der Sensoreinheit aus der äußeren Begrenzung des Gehäuses herausragt, während andere Teile der Sensoreinheit innerhalb des Gehäuses verbleiben. Die Sensoreinheit kann dabei in funktionale Abschnitte unterteilt sein, wie beispielsweise eine Auswertungseinheit, die Elektronikkomponenten wie einen Prozessor umfasst, und einen kapazitiven Sensorteil, der zur Messung physikalischer Parameter eingerichtet ist. Die Auswertungseinheit kann vollständig im Inneren des Gehäuses angeordnet sein, während der kapazitive Sensorteil aus dem Gehäuse herausragt. Dabei ist keine feste Grenze, zwischen der im Inneren und der außerhalb des Gehäuses angeordneten Einheit definiert, sodass der Übergang zwischen diesen Abschnitten flexibel und je nach Anwendungsfall angepasst gestaltet werden kann. Diese Konstruktion ermöglicht eine optimierte Anordnung der Sensoreinheit entsprechend den technischen und räumlichen Anforderungen.

Es kann vorgesehen sein, dass die Sensoreinheit dazu eingerichtet ist, regelmäßig eine Kapazitätsänderung zu ermitteln. Insbesondere kann die Sensoreinheit in einem 10 bis 50 Sekunden Intervall eine Kapazitätsänderung ermitteln. Insbesondere kann die Sensoreinheit in einem 20 bis 40 Sekunden Intervall eine Kapazitätsänderung ermitteln. Insbesondere kann die Sensoreinheit in einem 25 bis 35 Sekunden eine Kapazitätsänderung ermitteln. Insbesondere kann die Sensoreinheit in einem 30 Sekunden Intervall eine Kapazitätsänderung ermitteln. Dies kann eine regelmäßige Überwachung des Wasserstands auf dem Flachdach ermöglichen, indem Änderungen in der Kapazität der Sensoreinheit erfasst und verarbeitet werden können. Der Vorteil einer solchen Einrichtung besteht darin, dass eine präzise, regelmäßige und zeitnahe Erkennung von Wasserstandänderungen ermöglicht wird, während gleichzeitig der Energieverbrauch durch den Messbetrieb reduziert wird, da nicht durchgängig eine Kapazitätsänderung ermittelt wird.

Im Sinne dieser Offenbarung kann der Begriff "regelmäßig" als die gleichmäßige Wiederholung von Vorgängen innerhalb festgelegter Zeitintervalle verstanden werden. Ein Intervall kann dabei den spezifischen Zeitabstand zwischen zwei aufeinanderfolgenden Messungen bezeichnen. D.h. im Sinne der Offenbarung kann eine regelmäßige Messung, beispielsweise eine Kapazitätsänderung, in Intervallen durchgeführt werden, wobei die Sensoreinheit in konstanten, vorher definierten Zeitabständen, beispielsweise alle 30 Sekunden, arbeitet, d.h. eine Kapazitätsänderung erfasst, um eine kontinuierliche Überwachung des Wasserstands sicherzustellen. Dazu wird regelmäßig die Kapazitätsänderung mit zumindest einen Grenzwert verglichen. Die Regelmäßigkeit garantiert dabei eine gleichbleibende Qualität der Messdaten und eine rechtzeitige Reaktion auf potenziell kritische Ereignisse.

Die Sensoreinheit kann dementsprechend regelmäßig, beispielsweise alle 30 Sekunden, eine Kapazitätsänderung erfassen und nur beim Ereignis, beispielsweise eines Überschreitens und/oder Unterschreitens eines Grenzwerts, den aktuellen Wasserstand bestimmen und daraufhin die Kommunikationseinheit aktvieren, bspw. in dem die Kommunikationseinheit aus einem Energiesparmodus in den Kommunikationsmodus wechselt.

Die "Kapazitätsänderung" kann sich dabei auf eine Veränderung in der elektrischen Kapazität der Sensoreinheit beziehen, beispielsweise der als kapazitiver Sensorteil ausgebildete Abschnitt der Sensoreinheit, die auf eine Änderung des Wasserstands zurückzuführen ist. Diese Messmethode eignet sich besonders für den Einsatz auf Flachdächern, da sie robust, energieeffizient und präzise ist.

Der kapazitive Sensorteil kann, aber muss **nicht zwingend** direkt mit Wasser in Kontakt stehen, um den Wasserstand zu messen. Der kapazitive Sensorteil funktioniert durch die Messung von Änderungen der elektrischen Kapazität, die durch die Nähe eines Mediums, beispielsweise Wasser, verursacht wird. Das bedeutet, dass der kapazitive Sensorteil auch durch eine nicht-leitende Trennschicht wie Kunststoff oder Glas hindurcharbeiten kann und Kapazitätsänderungen erfassen kann. Dadurch kann die gesamte Sensoreinheit beispielsweise im Gehäuse angeordnet sein.

Es kann vorgesehen sein, dass das Ereignis ein Durchqueren, insbesondere ein Über- oder Unterschreiten, zumindest eines Grenzwerts umfasst. Diese Konfiguration kann es der Sensoreinheit ermöglichen, kritische Änderungen im Wasserstand zu erkennen und darauf zu reagieren, sobald ein Grenzwert überschritten oder unterschritten wird. Der Vorteil einer solchen Einrichtung besteht darin, dass die Vorrichtung nicht kontinuierlich arbeiten muss, sondern nur bei relevanten Ereignissen aktiv wird, was den Energieverbrauch reduziert und die Effizienz erhöht.

Im Sinne dieser Offenbarung kann der Begriff "Durchqueren" als das Über- oder Unterschreiten eines festgelegten Grenzwerts verstanden werden, der vorab definiert wurde.

Ein Grenzwert kann dabei eine physikalische Größe, beispielsweise eine elektrische Kapazität darstellen, der eine bestimmte Schwelle beschreibt. Das Ereignis "Durchqueren" tritt ein, sobald der aktuelle Wert diesen Grenzwert überschreitet oder unterschreitet, wodurch die Sensoreinheit ein Datensignal erzeugen und/oder eine Aktion auslösen kann. Diese Arbeitsweise ermöglicht eine zuverlässige und energieeffiziente Überwachung, da Mess- und Kommunikationsvorgänge nur bei relevanten Zustandsänderungen aktiviert werden.

Beispielsweise kann nur beim Über- und/oder Unterschreiten des Grenzwerts die Sensoreinheit den aktuellen Wasserstand bestimmen und die Kommunikationseinheit aktiveren um das Informationssignal mit dem aktuellen Wasserstand zu übertragen.

Es kann vorgesehen sein, dass zumindest zwei Grenzwerte eine Hysterese ausbilden. Dies kann eine stabile und zuverlässige Funktion der Vorrichtung ermöglicht, indem unnötige Signalwechsel vermieden werden, die durch kleine Schwankungen des Wasserstands verursacht werden könnten. Der Vorteil der Ausbildung einer Hysterese besteht darin, dass der Wechsel zwischen Zuständen, wie zum Beispiel "Kapazitätsänderung über Grenzwert" und "Kapazitätsänderung unter Grenzwert", erst bei signifikanten Änderungen erfolgt, was die Effizienz der Vorrichtung erhöht und Fehlalarme minimiert.

Im Sinne dieser Offenbarung kann der Begriff "Hysterese" als ein Bereich verstanden werden, der zwischen zwei Grenzwerten definiert ist, innerhalb dessen keine Zustandsänderung ausgelöst wird. Konkret bedeutet dies, dass ein Ereignis wie das Überschreiten eines oberen Grenzwerts nur dann zum Zustand "aktiv" führt, wenn der Kapazitätsänderung diesen Wert tatsächlich erreicht oder übersteigt. Der Zustand "inaktiv" wird erst dann erreicht, wenn die Kapazitätsänderung unter einen unteren Grenzwert fällt. Diese Definition verhindert ein häufiges Hin- und Herwechseln zwischen Zuständen bei Wasserstandschwankungen und trägt zur Betriebssicherheit der Vorrichtung bei.

Es kann vorgesehen sein, dass mit Eintritt des Ereignisses, insbesondere beim Durchqueren des Grenzwerts, die Sensoreinheit die Kommunikationseinheit aktiviert, wobei die Kommunikationseinheit von einem Energiesparmodus in einen Kommunikationsmodus wechselt, um zumindest das erste Informationssignal zu übermitteln. Diese Konfiguration ermöglicht es, die Energieeffizienz der Vorrichtung zu maximieren, indem die Kommunikationseinheit nur dann aktiviert wird, wenn relevante Ereignisse auftreten.

Ein weiterer Vorteil besteht darin, dass der Energieverbrauch der Vorrichtung erheblich reduziert wird, da die Kommunikationseinheit nicht kontinuierlich aktiv ist, sondern lediglich bei Eintritt eines definierten Ereignisses aus dem Energiesparmodus in den Kommunikationsmodus wechselt. Dies verlängert die Betriebsdauer der Vorrichtung insbesondere bei autarker Energieversorgung, wie sie durch die Energieerzeugungs- und Energiespeichereinheit bereitgestellt wird.

Im Sinne dieser Offenbarung beschreibt der Begriff "Energiesparmodus" einen Betriebszustand der Kommunikationseinheit, in dem der Energieverbrauch auf ein Minimum reduziert ist und keine Datenübertragung, insbesondere keine drahtlose, an das externe System stattfindet.

Der Begriff "Kommunikationsmodus" kann im Sinne dieser Offenbarung einen Betriebszustand bezeichnen, in dem die Kommunikationseinheit aktiviert ist und zur Übertragung von Daten, wie etwa dem ersten Informationssignal, drahtlos an das externe System eingerichtet ist. Der Wechsel zwischen den Betriebszuständen Energiespar -und Kommunikationsmodus kann durch die Sensoreinheit ereignisbasiert erfolgen, beispielsweise beim Feststellen der Sensoreinheit, dass das Durchqueren eines Grenzwerts vorliegt.

Die Auswertungseinheit der Sensoreinheit kann die Steuerung der Kommunikationseinheit übernehmen, indem sie den Wechsel zwischen Energiesparmodus und Kommunikationsmodus auslöst. Diese Steuerung basiert auf der Analyse von Sensordaten, die in Echtzeit mit definierten Grenzwerten verglichen werden. Die Verwendung von Apama EPL innerhalb der Auswertungseinheit kann ermöglichen, dass beispielsweise Ereignisse wie das Überschreiten oder Unterschreiten von zumindest eines Grenzwerts, bspw. einer Warn- und/oder Alarmschwellen präzise erkannt werden und die Kommunikationseinheit nur dann aktiviert wird, wenn relevante Ereignisse auftreten. Dadurch wird der Energieverbrauch der Vorrichtung minimiert und ihre Effizienz optimiert.

Es kann vorgesehen sein, dass die Kommunikationseinheit zumindest das erste Informationssignal über ein Kommunikationsnetzwerk übermittelt wird. Diese Anordnung ermöglicht eine flexible und zuverlässige drahtlose Übertragung von Informationen an ein externes System, beispielsweise an ein externes Überwachungssystem und/oder eine Cloud-Plattform, um den Wasserstand und/oder andere relevante Parameter, beispielsweise eine Gehäuseinnentemperatur, zu überwachen.

Der Vorteil der Übermittlung über ein Kommunikationsnetzwerk besteht darin, dass die Vorrichtung nahtlos in bestehende Infrastruktur integriert werden kann. Unabhängig von der physischen Lage der Vorrichtung gemäß der vorliegenden Offenbarung können Wasserstandsinformationen oder Warnmeldungen drahtlos und in Echtzeit an entfernte externe Systeme übertragen werden. Dadurch wird die Überwachung ortsunabhängig und effizient gestaltet.

Im Sinne dieser Offenbarung kann der Begriff "Kommunikationsnetzwerk" ein drahtloses Netzwerk umfassen, das beispielsweise über Mobilfunk (z. B. LTE, 5G), WLAN, LoRaWAN oder NB-IoT betrieben wird. Das Kommunikationsnetzwerk dient dazu, Informationen sicher und zuverlässig von der Vorrichtung an ein externes System zu übermitteln. Je nach Anwendungsfall kann das Netzwerk so gewählt werden, dass es den Anforderungen an Reichweite, Energieeffizienz und Übertragungsstabilität entspricht.

Es kann vorgesehen sein, dass die Vorrichtung zumindest eine Temperaturmesseinheit umfasst, die dazu eingerichtet ist, eine Gehäuseinnentemperatur zu überwachen. Diese Temperaturmesseinheit ermöglicht es, kritische Temperaturwerte innerhalb des Gehäuses zu erkennen und gegebenenfalls Maßnahmen einzuleiten, um die Funktionsfähigkeit der Vorrichtung zu gewährleisten.

Durch die Überwachung der Gehäuseinnentemperatur kann sichergestellt werden, dass die Elektronik der Vorrichtung, insbesondere die Sensoreinheit, die Kommunikationseinheit und die Energiespeichereinheit, innerhalb ihres definierten Betriebstemperaturbereichs arbeiten. Dies erhöht die Zuverlässigkeit und Lebensdauer der Vorrichtung, insbesondere bei extremen Umgebungsbedingungen. Dies ist vorteilhaft, da die Energiespeichereinheit, beispielsweise ein Lithium-Polymer-Akku, bis zu einer Maximaltemperatur, beispielsweise 80°C, zuverlässig funktioniert. Die Temperaturüberwachung trägt somit zur Verlängerung der Lebensdauer der Energiespeichereinheit sowie zur Betriebssicherheit der gesamten Vorrichtung bei.

Im Sinne dieser Offenbarung kann die "Temperaturmesseinheit" als ein Sensor verstanden werden, der sowohl die Innentemperatur des Gehäuses als auch die Temperatur der Energiespeichereinheit erfasst. Die Messdaten können in der Auswertungseinheit verarbeitet werden, um Temperaturabweichungen zu erkennen und entsprechende Maßnahmen einzuleiten, wie beispielsweise das Senden einer Warnmeldung an ein externes System oder das Herunterfahren bestimmter Komponenten, um Schäden durch Überhitzung zu vermeiden.

Es kann vorgesehen sein, dass zumindest das erste Informationssignal zumindest einen Wasserstand, und/oder eine Temperatur der Vorrichtung im Gehäuse, und/oder einen Ladezustand der Energiespeichereinheit umfasst.

Dies kann ermöglichen, dass das erste Informationssignal umfassende und relevante Daten über den Zustand der Vorrichtung gemäß der vorliegenden Offenbarung und deren Umgebung liefert. Der Vorteil besteht darin, dass durch die Kombination dieser Parameter ein vollständiges Bild des Systemstatus bereitgestellt wird, was eine präzise Überwachung und zielgerichtete Maßnahmen ermöglicht.

Im Sinne dieser Offenbarung kann das erste Informationssignal einen Datensatz beschreiben, der an ein externes System übermittelt wird. Der Wasserstand ist ein Parameter, der beispielsweise von der Sensoreinheit beim Überschreiten- und/oder Unterschreiten zumindest eines Grenzwerts bestimmt werden kann und den aktuellen Stand der Flüssigkeit auf dem überwachten Flachdach angibt. Der Wasserstand kann auch periodisch, beispielsweise einmal am Tag, ermittelt werden, ohne dass die Sensoreinheit einen Grenzwert über- und/oder unterschreitet.

Die Temperatur im Gehäuse der Vorrichtung kann von der Temperaturmesseinheit erfasst werden und dient der Überwachung des Betriebsumfelds der elektronischen Komponenten, einschließlich der Energiespeichereinheit. Der Ladezustand der Energiespeichereinheit kann Auskunft über die verbleibende verfügbare Energie angeben und dient der Beurteilung der Betriebsfähigkeit der Vorrichtung.

Es kann vorgesehen sein, dass die Kommunikationseinheit dazu ausgebildet ist, zumindest ein zweites Informationssignal zu empfangen, wobei das zweite Informationssignal zumindest einen neuen Grenzwert umfasst. Diese Einrichtung ermöglicht es, die Vorrichtung flexibel an veränderte Umgebungsbedingungen oder Anforderungen anzupassen, indem neue Grenzwerte bzw. Schwellenwerte, beispielsweise wie eine Warn- oder Alarmschwelle, dynamisch übermittelt und in der Vorrichtung hinterlegt werden.

Der Vorteil dieser Konfiguration besteht darin, dass die Grenzwerte der Vorrichtung, wie die Warnschwelle und die Alarmschwelle, über ein externes System, beispielsweise über eine Cloud-Plattform, angepasst werden können. Dies erhöht die Flexibilität und Vielseitigkeit der Vorrichtung und macht eine manuelle Neuprogrammierung vor Ort überflüssig. Darüber hinaus kann die Übertragung der neuen Grenzwerte in Kombination mit dem Kommunikationsmodus der Vorrichtung energieeffizient erfolgen.

Im Sinne dieser Offenbarung beschreibt das "zweite Informationssignal" eine Dateneinheit, die über die Kommunikationseinheit empfangen wird und die aktualisierte Parameter, wie einen neuen Grenzwert, enthält. Der Begriff "Grenzwert" bezieht sich dabei auf eine Schwelle, die entweder als Warnschwelle oder Alarmschwelle definiert sein kann. Das Einspielen eines neuen Grenzwerts ermöglicht eine dynamische Anpassung der Vorrichtung an veränderte Betriebsbedingungen, wie beispielsweise einen steigenden Wasserpegel oder andere spezifische Anforderungen.

Der Empfang des zweiten Informationssignals kann durch die Kommunikationseinheit erfolgen, wobei die Kommunikationseinheit die übertragenen Daten an die Sensoreinheit weiterleitet, um den zumindest einen neuen Grenzwert zu übernehmen.

Die Möglichkeit, Grenzwerte über ein zweites Informationssignal anzupassen, bietet Vorteile in der Wartung und Optimierung der Vorrichtung. Beispielsweise kann die Anpassung von Grenzwerten dazu beitragen, unnötige Warnmeldungen zu vermeiden oder die Überwachung auf geänderte Umweltbedingungen abzustimmen. Diese Funktion ist besonders in schwer zugänglichen Einsatzgebieten, wie Flachdächern, von Vorteil.

Es kann vorgesehen sein, dass das Gehäuse der Vorrichtung gemäß der vorliegenden Offenbarung auf einer Abstandseinheit angeordnet ist. Diese Abstandseinheit kann dazu dienen, das Gehäuse und somit die Vorrichtung in einer erhöhten Position zu halten, wodurch die Funktionalität der Sensoreinheit und der gesamten Vorrichtung verbessert wird.

Der Vorteil der Verwendung einer Abstandseinheit kann darin liegen, dass sie die Lebensdauer der Vorrichtung erhöht, indem sie das Gehäuse und dessen Komponenten vor schädlichen Umwelteinflüssen wie Staunässe oder Schmutz schützt. Gleichzeitig gewährleistet die Abstandseinheit eine optimale Positionierung der Sensoreinheit in der Nähe über der Dachfläche, sodass diese präzise Messungen durchführen kann. Diese Anordnung trägt zudem dazu bei, dass die Kommunikationseinheit innerhalb des Gehäuses störungsfrei arbeiten kann, indem mögliche Hindernisse für die Signalübertragung minimiert werden.

Im Sinne dieser Offenbarung beschreibt der Begriff "Abstandseinheit" eine Anordnung, die das Gehäuse über der Dachfläche derart positioniert, dass der kapazitive Sensorteil möglichst senkrecht zu der Dachfläche ausgerichtet ist. Diese Abstandseinheit kann beispielsweise in Form von Stützen, Halterungen oder einem Sockel ausgebildet sein und besteht vorzugsweise aus einem Material, das sowohl mechanisch stabil als auch witterungsbeständig ist. Die Höhe der Abstandseinheit kann dabei variabel gestaltet werden, um sie an die spezifischen Anforderungen der jeweiligen Dachfläche, der Länge des kapazitiven Sensorteils oder der zu überwachenden Umgebung anzupassen.

Ein Verfahren zur Wasserstandüberwachung auf Flachdächern umfasst die Schritte einer Energieversorgung mittels zumindest einer Energieerzeugungseinheit und zumindest einer Energiespeichereinheit. Ein weiterer Schritt ist ein Bestimmen eines Wasserstands ereignisbasiert mittels einer Sensoreinheit. Ferner ist ein Übertragen zumindest eines ersten Informationssignals, periodisch und/oder aufgrund eines Ereignisses, drahtlos an ein externes System mittels einer Kommunikationseinheit vorgesehen.

Hierdurch wird Energieeffizienz und Autarkie ermöglicht. Die Energieversorgung durch eine Kombination aus Energieerzeugungseinheit, beispielsweise Solarzellen, und Energiespeichereinheit, beispielsweise Akkumulatoren, gewährleistet den langfristigen, autarken Betrieb der Vorrichtung gemäß der vorliegenden Offenbarung, auch unter wechselnden Umweltbedingungen. Das ereignisbasierte Bestimmen des Wasserstands kann den Energieverbrauch weiter reduzieren, da Messungen nur bei relevanten Änderungen durchgeführt werden und verschickt werden. Durch die drahtlose Übertragung der Daten kann eine nahtlose Integration in externe Überwachungssysteme ermöglicht werden, ohne dass physische Kabel erforderlich sind.

Im Sinne dieser Offenbarung kann der Schritt "Bestimmen eines Wasserstands" die Verwendung der Sensoreinheit, die Messdaten wie die Kapazitätsänderung erfasst und diese durch die Auswertungseinheit analysiert, umfassen.

Im Sinne dieser Offenbarung kann der Schritt "Übertragen eines ersten Informationssignals" drahtlos über ein Kommunikationsnetzwerk erfolgen, wobei der Energieverbrauch durch den Wechsel der Kommunikationseinheit zwischen einem Energiesparmodus und einem Kommunikationsmodus optimiert wird.

Sämtliche in Verbindung mit der erfindungsgemäßen Vorrichtung erzielbaren Vorteile und technischen Wirkungen können einzeln oder in Kombination auch für das erfindungsgemäße System und das erfindungsgemäße Verfahren gelten.

Das oben Beschriebene lässt sich mit anderen Worten auf eine mögliche konkretere Ausgestaltung der Offenbarung wie nachfolgend beschrieben zusammenfassen, wobei die nachfolgende Beschreibung als für die Offenbarung nicht einschränkend auszulegen ist.

Eine Vorrichtung, beispielsweise umfassend einen kapazitiven Sensorteil, kann für eine **Wasserstandüberwachung** auf **einem Flachdach** vorgehen sein.

Der kapazitive Sensorteil kann als ein **Streifen** ausgebildet sein. Der Wasserstand auf dem Flachdach kann damit bestimmt werden.

Die Vorrichtung gemäß der vorliegenden Offenbarung kann autark, ohne Feststromanschluss auskommen. Er kann eine Energieerzeugungseinheit, beispielsweise ein Solarelement, und eine Energiespeichereinheit in Form eines Akkus umfassen.

Es können beispielsweise zwei Grenzwerte, insbesondere eine Warnschwelle und eine Alarmschwelle, festgelegt werden. Wenn zumindest einer der Grenzwerte überschritten wird, wird entsprechend zumindest eine Warnmeldung und/oder Alarmmeldung als auch der gemessene Wasserstand an ein externes System übermittelt. Dieser übermittelte Wert kann auch höher als der Grenzwert sein.

Die Kommunikationseinheit der Vorrichtung kann eine kurze Nachricht, beispielsweise ein erstes Informationssignal, absetzen. Wenn es kein Vorkommnis bzw. Ereignis gibt, ist die Kommunikationseinheit ausgeschaltet, beispielsweise in einem Energiesparmodus, und verbraucht keinen Strom, beispielsweise nur einen sehr geringen Ruhestrom

Einmal pro Tag kann das erste Informationssignal gesendet werden, das den Ladezustand der Energiespeichereinheit und die aktuelle Gehäuseinnentemperatur sowie einen aktuellen Wasserstand übermittelt.

Im Falle eines Ereignisses, beispielsweise beim Überschreiten zumindest eines der festgelegten Grenzwerte kann die Sensoreinheit die Kommunikationseinheit aufwecken, wobei diese in Echtzeit das erste Informationssignal an das externe System, beispielsweise einer Cloud, sendet. In der Cloud bzw. im externen System wird voreingestellt, ob daraufhin eine E-Mail und/oder eine SMS verschickt wird.

Eine Software kann für das Übersenden von Nachrichten an das externe System vorgesehen sein. Die Software ist akkuschonend und datenvolumenschonend ausgestaltet, da minimal periodisch einmal pro Tag gesendet wird und maximal ereignisbasiert, bei jeweiligem Über- oder Unterschreiten der voreingestellten Grenzwerte.

Es kann auch eine Temperatur im Inneren des Gehäuses gemessen werden. Das Gehäuse in der Vorrichtung ist dazu vorgesehen zu verhindern, dass der kapazitive Sensor Schlagregen, Blätter oder andere Umwelteinflüsse abbekommt.

Die Energiespeichereinheit kann beispielsweise bis 80°C ausgelegt sein. Dies stellt eine technische Besonderheit dar, da herkömmliche Akkus lediglich bis 60 °C ausgelegt sind.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Offenbarung umfassen auch nicht explizit genannte Kombinationen von zuvor oder im Folgenden bezüglich der in den Weiterbildungen beschriebenen Merkmalen der Offenbarung. Insbesondere wird dabei der Fachmann auch Einzelaspekte als Verbesserung oder Ergänzungen zu der jeweiligen Grundform der vorliegenden Offenbarung hinzufügen. Insbesondere können Merkmale der Vorrichtungsansprüche durch entsprechende Funktionen umgesetzt und/oder ausgeführt werden, wonach diese das Verfahren ergänzen beziehungsweise erweitern. Ferner können Verfahrensschritte durch entsprechende Implementierungsmodule in der Vorrichtung umgesetzt werden. Somit gilt das oben mit Bezug zur Vorrichtung beschriebene analog auch für das Verfahren und entsprechend umgekehrt.

Weitere Einzelheiten und Vorteile der Erfindung sollen nun anhand der in den Zeichnungen dargestellten Ausführungsbeispielen näher erläutert werden.

### Es zeigen schematisch:

- Fig. 1: eine schematische Darstellung der Vorrichtung eines ersten Ausführungsbeispiels;
- Fig. 2: eine perspektivische schematische Darstellung der Vorrichtung des ersten Ausführungsbeispiels;
- Fig. 3: eine perspektivische schematische Darstellung der Vorrichtung eines zweiten Ausführungsbeispiels; und
- Fig. 4: das Verfahren.

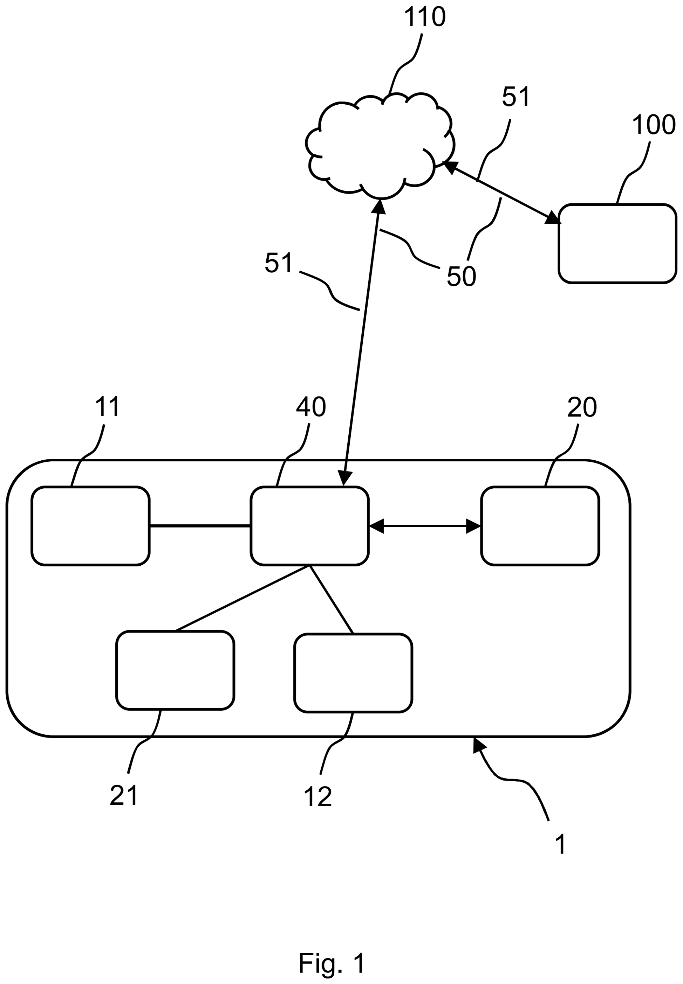

Fig. 1 zeigt eine Vorrichtung 1 zur Wasserstandüberwachung auf Flachdächern. Die Vorrichtung 1 schützt interne Komponenten gegen äußere Einflüsse wie Regen, Schmutz und Temperaturschwankungen.

Die Vorrichtung 1 umfasst die Energieerzeugungseinheit 11 und eine Energiespeichereinheit 12 für einen autarke Energieversorgung der Vorrichtung 1, eine Kommunikationseinheit 40 für eine autarke Wasserstandüberwachung.

Die Vorrichtung 1 ist mit einer Sensoreinheit 20 ausgestattet, die eingerichtet ist, ereignisbasiert den Wasserstand zu bestimmen. Die Sensoreinheit 20 umfasst einen kapazitiven Sensorteil 31, der durch die Messung von Kapazitätsänderungen eine präzise Wasserstandbestimmung ermöglicht.

Die Sensoreinheit 20 ermittelt regelmäßig eine Kapazitätsänderung, beispielsweise in einem Intervall von 10 bis 40 Sekunden. Beispielsweise kann regelmäßig alle 30 Sekunden eine Kapazitätsänderung ermittelt werden.

Des Weiteren vergleicht die Sensoreinheit 20 regelmäßig, beispielsweise alle 30 Sekunden, ob die Kapazitätsänderung dazu führt, dass zumindest ein Grenzwert durchquert wurde, d.h. beispielsweise über- oder unterschritten wurde.

Im Fall, dass zumindest ein Grenzwert durchquert wurde, bestimmt die Sensoreinheit 20 auf Grund dieses Ereignisses einen Wasserstand aus den gemessenen Kapazitätswerten und aktiviert die Kommunikationseinheit 40. Beispielsweise wechselt dazu die Kommunikationseinheit 40 aus den Energiesparmodus in den Kommunikationsmodus.

Die Kommunikationseinheit 40 ist eingerichtet, zumindest das erstes Informationssignal 50 drahtlos an ein externes System 100 zu übertragen. Beispielsweise kann die Kommunikationseinheit im Kommunikationsmodus das erstes Informationssignal 50 übertragen. Das externe System 100 ist über ein Kommunikationsnetzwerk 110 mit der Vorrichtung 1 verbunden. Die drahtlose Übertragung des Informationssignals 50 ermöglicht eine Integration in externe Überwachungssysteme, ohne dass Kabel erforderlich sind.

Solange die Sensoreinheit 20 kein Ereignis, wie beispielsweise ein Durchqueren zumindest eines Grenzwerts, erkennt, befindet sich die Kommunikationseinheit 40 in dem Energiesparmodus.

Die Kommunikationseinheit 40 erwacht periodisch, beispielsweise einmal am Tag und überträgt zumindest den aktuellen Wasserstand.

Das erste Informationssignal kann darüber hinaus beispielsweise den Ladezustand der Energiespeichereinheit und eine aktuelle Gehäuseinnentemperatur zusätzlich zu dem aktuellen Wasserstand umfassen.

Dazu umfasst die Vorrichtung 1 im Gehäuse 2 eine Temperaturmesseinheit 21 die die Gehäuseinnentemperatur misst und überwacht. So kann das Betriebsumfeld der elektronischen Komponenten, einschließlich der Energiespeichereinheit 12 innerhalb des Gehäuses 2.

Durch die Kombination dieser Komponenten wird eine zuverlässige, energieeffiziente und autarke Überwachung des Wasserstands ermöglicht. Die ereignisbasierte Arbeitsweise der Sensoreinheit 20 minimiert den Energieverbrauch, während das Gehäuse 2 die Lebensdauer der Vorrichtung 1 verlängert, indem es empfindliche Komponenten vor Umwelteinflüssen schützt.

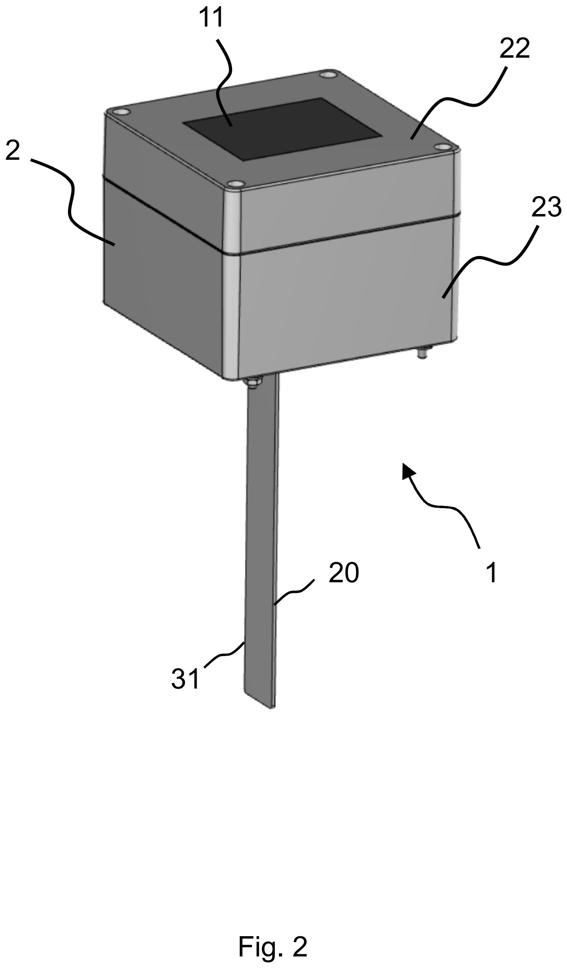

Fig. 2 zeigt die Vorrichtung 1 mit einem Gehäuse 2, auf dessen Oberseite eine Energieerzeugungseinheit 11, beispielsweise in Form eines Solarmoduls, angebracht ist. Im Inneren des Gehäuses 2, beispielsweise im Unterteil 23 ist eine Energiespeichereinheit 12 untergebracht, die die erzeugte Energie der Energieerzeugungseinheit 11 speichert. Zusammen wird eine autarke Energieversorgung der Vorrichtung 1, unabhängig von einem externen Stromanschluss ermöglicht.

Das Gehäuse 2 kann aus einem Deckel 22 und einem Unterteil 23 gebildet sein. Diese können beispielsweise miteinander verklebt und/oder verschraubt sein.

Das Gehäuse 2 kann beispielsweise Schutzart IP67 erfüllen.

Die Vorrichtung 1 ist mit einer Sensoreinheit 20 ausgestattet, die teilweise unterhalb des Gehäuses 2 herausragt. Hierbei handelt es sich um einen kapazitiven Sensorteil 31 der Sensoreinheit 20, der teilweise aus dem Gehäuse 2 hervorsteht. Der kapazitive Sensorteil 31 ist in der Lage, Kapazitätsänderungen zu erkennen, die durch das Vorhandensein von Wasser und/oder Feuchtigkeit verursacht werden, wodurch eine präzise Messung des Wasserstands ermöglicht wird.

Durch diese Anordnung bleibt ein Teil der Sensoreinheit 20, beispielsweise eine Auswertungseinheit innerhalb des Gehäuses 2 geschützt, während der kapazitive Sensorteil 31, der außerhalb des Gehäuses 2 angeordnet ist, direkten Zugang zur Umgebung auf dem Flachdach hat. Die Energieerzeugungseinheit 11 und die Energiespeichereinheit 12 gewährleisten zusammen eine langfristige, wartungsarme und autarke Energieversorgung, wodurch die Vorrichtung 1 besonders geeignet für den autarken Einsatz in abgelegenen oder schwer zugänglichen Bereichen ist, beispielsweise auf Flachdächern.

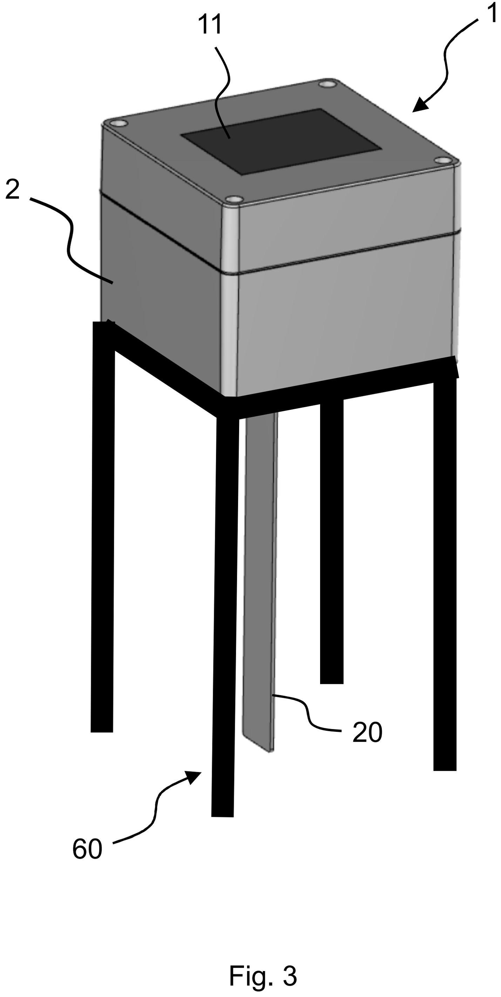

Fig. 3 zeigt die Vorrichtung 1, die auf einer Abstandseinheit 60 angeordnet ist. Die Abstandseinheit 60 hebt das Gehäuse 2 von der Dachfläche ab und schützt es vor direktem Kontakt mit Wasser oder Schmutz. Die Abstandseinheit 60 besteht aus einem stabilen und witterungsbeständigen Material und gewährleistet eine optimale Positionierung des kapazitiven Sensorteils 31der Sensoreinheit 20.

Die Abstandseinheit 60 ist unterhalb des Gehäuses 2 angeordnet, wobei der kapazitive Sensorteil 31 aus dem Gehäuse 2 herausragt. Diese Positionierung erlaubt eine präzise Erfassung von Kapazitätsänderungen durch Wasser in der Umgebung. Die Energieerzeugungseinheit 11 ist auf der Oberseite des Gehäuses 2 angeordnet, um maximalen Zugang zu Sonnenlicht zu gewährleisten und somit eine autarke Vorrichtung 1 ermöglicht.

Die Abstandseinheit 60 trägt dazu bei, dass die Vorrichtung 1 vor Staunässe und mechanischen Einflüssen geschützt wird. Dadurch wird die Lebensdauer der Vorrichtung 1 erhöht. Gleichzeitig verbessert die erhöhte Positionierung die Signalübertragung der Kommunikationseinheit 40, da Hindernisse auf der Dachfläche minimiert werden. Die Anordnung der Vorrichtung 1 auf der Abstandseinheit 60 kombiniert Schutz und Funktionalität für eine zuverlässige Wasserstandüberwachung.

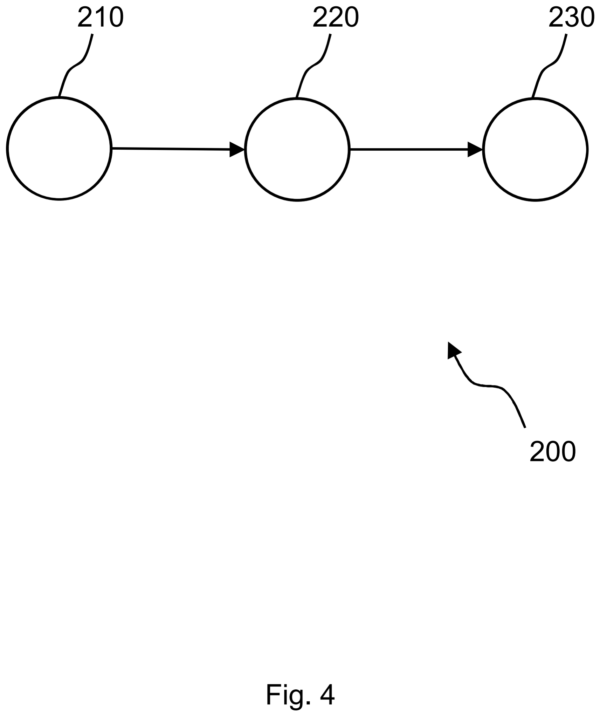

Fig. 4 illustriert das Verfahren 200 zur Wasserstandüberwachung, das mit der Vorrichtung 1 umgesetzt wird. Das Verfahren 200 umfasst mehrere Schritte, die eine zuverlässige und energieeffiziente Überwachung gewährleisten.

Im ersten Schritt 210 erfolgt die Energieversorgung durch die Energieerzeugungseinheit 11 und die Energiespeichereinheit 12. Die Energieerzeugungseinheit 11 erzeugt elektrische Energie, die von der Energiespeichereinheit 12 gespeichert wird, um die Vorrichtung 1 unabhängig von einer externen Stromquelle zu betreiben.

Im zweiten Schritt 220 bestimmt die Sensoreinheit 20 ereignisbasiert den Wasserstand. Dieser Schritt nutzt den kapazitiven Sensorteil 31, um Kapazitätsänderungen zu erkennen, die durch Wasser verursacht werden. Die ereignisbasierte Funktionsweise der Sensoreinheit 20 reduziert den Energieverbrauch, da Messungen nur bei relevanten Ereignissen durchgeführt werden.

Im dritten Schritt überträgt die Kommunikationseinheit 40 ein erstes Informationssignal 50 drahtlos an ein externes System 100. Dieser Schritt wird als Übertragen 230 bezeichnet. Das Informationssignal 50 enthält Daten wie den Wasserstand, die Gehäuseinnentemperatur oder den Ladezustand der Energiespeichereinheit 12.

Durch diese Schritte wird eine kontinuierliche, energieeffiziente und zuverlässige Überwachung des Wasserstands ermöglicht. Das Verfahren 200 minimiert durch die ereignisbasierte Arbeitsweise den Energieverbrauch und erlaubt gleichzeitig eine ortsunabhängige Überwachung durch die drahtlose Übertragung des Informationssignals 50.

Die Vorrichtung zur Wasserstandüberwachung auf Flachdächern kombiniert eine kapazitive Sensoreinheit, eine autarke Energieversorgung und drahtlose Kommunikation. Durch ihre robuste Konstruktion, ereignisbasierte Aktivierung und flexible Anpassbarkeit gewährleistet sie eine präzise, energieeffiziente und zuverlässige Überwachung unter verschiedensten Umgebungsbedingungen, ohne externe Stromversorgung oder aufwendige Verkabelung.

### BEZUGSZEICHENLISTE

- 1: Vorrichtung
- 2: Gehäuse
- 11: Energieerzeugungseinheit
- 12: Energiespeichereinheit
- 20: Sensoreinheit
- 31: kapazitiver Sensorteil
- 21: Temperaturmesseinheit
- 22: Gehäusedeckel
- 23: Gehäuseunterteil
- 40: Kommunikationseinheit
- 50, 51: Informationssignal
- 60: Abstandseinheit
- 100: externes System
- 110: Kommunikationsnetzwerk
- 200: Verfahren
- 210, 220, 230: Verfahrensschritte

## Patentansprüche

1. Vorrichtung (1) mit einem Gehäuse (2), für eine Wasserstandüberwachung auf Flachdächern, umfassend:
- zumindest eine Energieerzeugungseinheit (11) und zumindest eine Energiespeichereinheit (12);
- eine Sensoreinheit (20), die dazu eingerichtet ist, ereignisbasiert einen Wasserstand zu bestimmten;
- zumindest eine Kommunikationseinheit (40), die dazu eingerichtet ist, zumindest ein erstes Informationssignal (50), periodisch und/oder auf Grund des Ereignisses, drahtlos an ein externes System (100) zu übertragen.

2. Vorrichtung nach Anspruch 1, **dadurch gekennzeichnet, dass** die Sensoreinheit derart angeordnet ist, dass sie zumindest teilweise aus dem Gehäuse hervorsteht.

3. Vorrichtung (1) nach Anspruch 1, wobei die Sensoreinheit (20) dazu eingerichtet ist, regelmäßig, insbesondere in einem Intervall von 10 bis 40 Sekunden, eine Kapazitätsänderung zu ermitteln.

4. Vorrichtung (1) nach einem der vorhergehenden Ansprüche, wobei das Ereignis ein Durchqueren, insbesondere ein Über- oder Unterschreiten, zumindest eines Grenzwerts umfasst.

5. Vorrichtung (1) nach einem der vorhergehenden Ansprüche, wobei um den zumindest einen Grenzwert eine Hysterese ausbildet ist.

6. Vorrichtung (1) nach einem der vorhergehenden Ansprüche, wobei mit Eintritt des Ereignisses, insbesondere beim Durchqueren des Grenzwerts, die Sensoreinheit (20) die Kommunikationseinheit (40) aktiviert, wobei die Kommunikationseinheit (40) von einen Energiesparmodus in einen Kommunikationsmodus wechselt, um zumindest das erste Informationssignal (50) zu übermitteln.

7. Vorrichtung (1) nach einem der vorhergehenden Ansprüche, wobei das Kommunikationsmodul (40) zumindest das erste Informationssignal (50) über ein Kommunikationsnetzwerk (110) übermittelt.

8. Vorrichtung (1) nach einem der vorhergehenden Ansprüche, weiter umfassend zumindest eine Temperaturmesseinheit (21), zum Überwachen einer Gehäuseinnentemperatur.

9. Vorrichtung (1) nach einem der vorhergehenden Ansprüche, wobei zumindest das erste Informationssignal (50) umfasst:
- zumindest einen Wasserstand, und/oder
- eine Temperatur der Vorrichtung im Gehäuse, und/oder
- einen Ladezustand der Energiespeichereinheit.

10. Vorrichtung (1) nach einem der vorhergehenden Ansprüche, wobei die Kommunikationseinheit (40) dazu ausgebildet ist, zumindest ein zweites Informationssignal (51) zu empfangen, wobei das zweite Informationssignal (51) zumindest einen neuen Grenzwert umfasst.

11. Vorrichtung (1) nach einem der vorhergehenden Ansprüche, wobei das Gehäuse (2) auf einer Abstandseinheit (60) angeordnet ist.

12. Verfahren (200) für eine Wasserstandüberwachung auf Flachdächern, umfassend den Schritten:
- Energieversorgung (210), mittels zumindest einer Energieerzeugungseinheit (11) und zumindest einer Energiespeichereinheit (12);
- Bestimmen (220) eines Wasserstands, ereignisbasiert mittels einer Sensoreinheit (20);
- Übertragen (230) zumindest eines ersten Informationssignals (50), periodisch und/oder auf Grund eines Ereignisses mittels einer Kommunikationseinheit (40) drahtlos an ein externes System (100).
